# FASCICULE DE BREVET EUROPEEN

(11) **EP 3 184 821 B1**
(45) Date de publication et mention de la délivrance du brevet: **27.02.2019**
(21) Numéro de dépôt: 16202694.2
(22) Date de dépôt: 07.12.2016
(51) Int. Cl.: F04C 25/02, B60T 17/02, F04C 28/06, F04C 29/00, F04C 18/344

(54) **DISPOSITIF DE POMPE A VIDE COMPORTANT UN MECANISME D'ACCOUPLEMENT ACTIONNE PAR ACTIONNEUR PNEUMATIQUE**
VAKUUMPUMPENVORRICHTUNG, DIE EINEN KOPPLUNGSMECHANISMUS UMFASST, DER DURCH EIN PNEUMATISCHES STELLGLIED BETÄTIGT WIRD
VACUUM PUMP DEVICE COMPRISING A COUPLING MECHANISM ACTUATED BY A PNEUMATIC ACTUATOR

(30) Priorité: 22.12.2015 FR 1563075
(43) Date de publication de la demande: 28.06.2017
(73) Titulaire: Renault S.A.S., 92100 Boulogne-Billancourt (FR)
(72) Inventeur: VITTU, Laurent, 92800 PUTEAUX (FR); DAUBERCIES, Florent, 78230 LE PECQ (FR)

(56) Documents cités:
- WO-A1-2012/164466
- WO-A1-2014/029444
- WO-A1-2015/090415

## Description

### 1. Domaine de l'invention

L'invention concerne le domaine des pompes à vide pour véhicules équipés d'un moteur entraînant en rotation un arbre à cames accouplé avec la pompe à vide. Elle concerne plus particulièrement un dispositif de pompe à vide comportant un mécanisme d'accouplement actionné par un actionneur pneumatique ainsi qu'un véhicule équipé d'un tel dispositif.

### 2. Art antérieur

Les véhicules automobiles sont équipés classiquement d'au moins une pompe à vide, les véhicules étant équipés d'un moteur entraînant en rotation un arbre à cames accouplé avec la pompe à vide. La liaison entre l'arbre à cames et la pompe à vide est réalisée par un système de crabotage.

La pompe à vide crée une dépression dans un circuit de vide impliqué dans les fonctions d'assistance au freinage, de direction assistée, de commande de la vanne de recirculation des gaz d'échappement, de commande de la vanne de régulation du turbocompresseur ou de commande du starter automatique. Les fonctions précitées ne sont pas actives en permanence mais uniquement pendant les phases de freinage, de rotation du volant, de changement de vitesse, d'accélération ou de démarrage. Par conséquent, en dehors des phases énumérées plus haut, le circuit de vide n'est pas utilisé. Dans une majorité des véhicules, la pompe à vide est entraînée en rotation par l'arbre à cames quel que soit le niveau de vide réalisé. La pompe continue donc à créer une dépression dans le circuit de vide alors même qu'un niveau de vide suffisant est atteint dans le circuit de vide pour mettre en oeuvre les fonctions précitées. Lorsqu'un niveau de vide suffisant est atteint dans le circuit de vide, l'entraînement de la pompe à vide en rotation induit des pertes par frottement inutiles dans le moteur. Ces pertes par frottement augmentent inutilement la consommation énergétique du moteur ainsi que les émissions de CO2. En outre, l'entraînement en permanence de la pompe à vide impose un dimensionnement conséquent de la pompe à vide du fait de sa rotation perpétuelle.

Il est connu des dispositifs de pompe à vide comportant un mécanisme d'accouplement actionné par actionneur hydraulique.

Le document WO 2015/090415-A1 divulgue ainsi un dispositif de pompe à vide avec un mécanisme d'accouplement pour actionner la pompe à vide, ledit mécanisme passe d'un état accouplé à un état désaccouplé grâce à une pompe hydraulique.

Le document WO 2014/029444-A1 présente un agencement d'assistance de frein pneumatique comprenant une pompe à vide mécanique avec un embrayage magnéto-rhéologique complexe.

Ces dispositifs déconnectent la pompe à vide lorsqu'une certaine dépression est atteinte dans le circuit de vide puis reconnectent la pompe lorsque la dépression est insuffisante. Ces dispositifs présentent l'inconvénient d'une architecture lourde nécessitant l'ajout d'un circuit hydraulique augmentant les coûts de fabrication et de maintenance.

### 3. Objectifs de l'invention

La présente invention propose une solution visant à pallier les inconvénients précités. Un objectif de l'invention est de permettre un pilotage par actionneur pneumatique de la rotation de la pompe à vide selon la dépression créée par celle-ci dans le circuit de vide.

### 4. Résumé de l'invention

L'invention concerne un dispositif de pompe à vide pour un véhicule automobile comprenant un arbre à cames, le dispositif comportant une pompe à vide destinée à créer une dépression dans un circuit de vide, un arbre d'entraînement entraînant en rotation la pompe à vide, un mécanisme d'accouplement présentant un état accouplé, dans lequel l'arbre à cames entraîne en rotation l'arbre d'entraînement, et un état désaccouplé dans lequel l'arbre d'entraînement n'est pas entraîné en rotation, caractérisé en ce qu'il comporte en outre un actionneur pneumatique alimenté en énergie pneumatique par le circuit de vide, lequel actionneur pneumatique réalise un changement d'état du mécanisme d'accouplement entre l'état accouplé et l'état désaccouplé. Ce dispositif présente l'avantage de permettre un désaccouplement de l'arbre à cames et de l'arbre d'entraînement de la pompe à vide en fonction de la dépression dans le circuit de vide afin de limiter les pertes par frottement liées à l'entraînement de la pompe à vide pas l'arbre à cames. L'utilisation du circuit de vide pour alimenter l'actionneur pneumatique évite d'avoir à recourir à un actionneur hydraulique qui ajouterait de la complexité au dispositif et qui en augmenterait le coût.

On entend par dépression la différence entre la pression atmosphérique et la pression dans le circuit de vide. Dans la mesure où la pression dans le circuit de vide est inférieure à la pression atmosphérique, la dépression dans le circuit de vide est positive.

Selon un mode de réalisation particulier, l'actionneur pneumatique est agencé de sorte à mettre le mécanisme d'accouplement dans un état désaccouplé lorsque la dépression dans le circuit de vide passe au dessus d'un premier seuil de dépression. Ceci permet d'arrêter l'entraînement de la pompe à vide lorsqu'une dépression suffisante pour faire fonctionner les éléments utilisant le circuit de vide est atteinte dans le circuit de vide.

Selon un mode de réalisation particulier, l'actionneur pneumatique est agencé de sorte à mettre le mécanisme d'accouplement dans un état accouplé lorsque la dépression dans le circuit de vide passe en dessous d'un deuxième seuil de dépression. Ceci permet de démarrer l'entraînement de la pompe à vide lorsque la dépression dans le circuit de vide n'est plus suffisante pour faire fonctionner les éléments utilisant le circuit de vide.

Selon un mode de réalisation particulier, le deuxième seuil de dépression est inférieur au premier seuil de dépression. Ceci permet d'éviter une instabilité de fonctionnement dans laquelle la pression dans le circuit de vide oscillerait autour d'un des deux seuils, démarrant et arrêtant l'entraînement de la pompe de manière instable. Ce cas d'instabilité peut se présenter en particulier lorsque le deuxième seuil est égal au premier.

Selon un autre mode de réalisation, le dispositif comporte un système de déclenchement pour commander le mécanisme d'accouplement afin d'obtenir un accouplement et désaccouplement franc de l'arbre à cames avec/d'avec l'arbre d'entraînement de la pompe à vide. Ledit système de déclenchement est agencé pour maintenir en position accouplée/désaccouplée le mécanisme d'accouplement tout au long du déplacement du piston.

Selon un mode de réalisation particulier, l'actionneur pneumatique comporte un piston coulissant dans un cylindre. Par exemple, le cylindre est connecté au circuit de vide d'un côté du piston et à l'atmosphère de l'autre côté du piston de sorte qu'une dépression dans le circuit de vide crée une force d'aspiration sur le piston.

Selon un mode de réalisation particulier, l'actionneur pneumatique comporte un mécanisme de rappel rappelant l'actionneur pneumatique dans une position par défaut. Par exemple, le mécanisme de rappel est un ressort qui exerce une force de rappel sur le piston s'opposant à la force d'aspiration.

Selon un mode de réalisation particulier, le mécanisme d'accouplement comporte un élément sélecteur mobile en translation entre une première position mettant le mécanisme d'accouplement dans l'état accouplé et une deuxième position mettant le mécanisme d'accouplement dans l'état désaccouplé. Par exemple, l'élément sélecteur est déplacé de sorte à mettre le mécanisme d'accouplement dans l'état désaccouplé lorsque la force d'aspiration exercée sur le piston est supérieure à la force de rappel, le piston se déplaçant alors dans le sens de la force d'aspiration. A l'inverse, lorsque la force d'aspiration est inférieure à la force de rappel, le piston se déplace dans le sens de la force de rappel et l'élément sélecteur met le mécanisme d'accouplement dans l'état accouplé.

Selon un mode de réalisation particulier, le mécanisme d'accouplement comporte un mécanisme de crabotage, par exemple de type boîte de vitesse.

On entend par crabotage l'accouplement de deux pièces par l'engagement de dents ou de saillies de l'une d'elles dans des logements correspondants ménagés dans l'autre pièce.

Selon un mode de réalisation particulier, le mécanisme d'accouplement comporte un mécanisme d'embrayage.

On entend par embrayage l'accouplement de deux pièces par adhérence.

L'invention concerne également un véhicule comportant ledit dispositif de pompe à vide.

### 5. Liste des figures

D'autres caractéristiques et avantages innovants ressortiront de la description ci-après, fournie à titre indicatif et nullement limitatif, en référence aux dessins annexés, dans lesquels :
- La figure 1 représente un schéma fonctionnel conforme à l'invention ;
- La figure 2 représente un schéma fonctionnel conforme à un premier mode de réalisation de l'invention dans un état accouplé du mécanisme d'accouplement ;
- La figure 3 représente un schéma fonctionnel du mode de réalisation de la figure 2 dans un état désaccouplé du mécanisme d'accouplement ;
- La figure 4 représente un organigramme conforme à un premier fonctionnement de l'invention ; et
- La figure 5 représente un organigramme conforme à un deuxième fonctionnement de l'invention.

### 6. Description détaillée

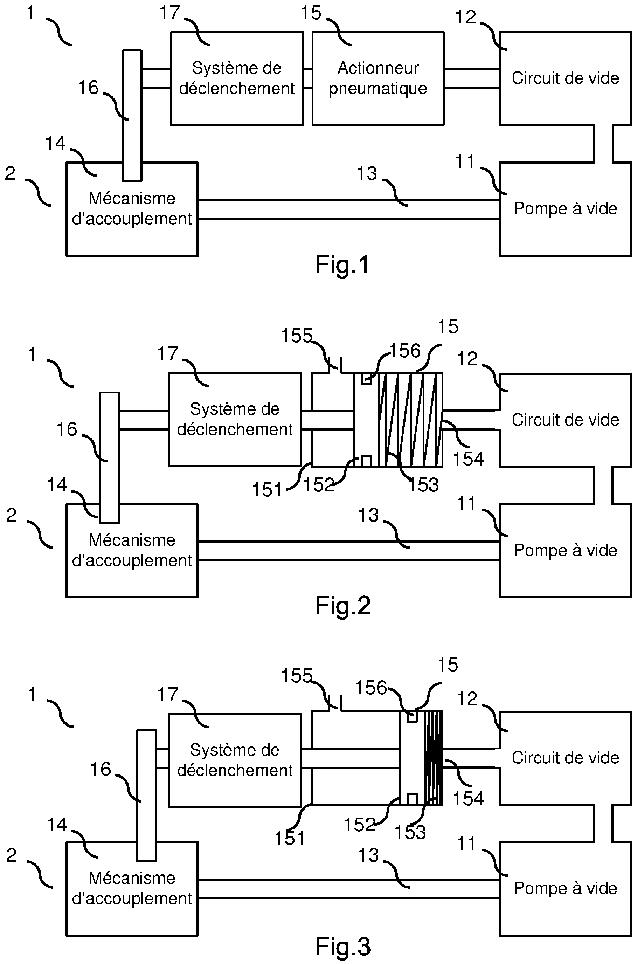

En référence à la figure 1 est représenté un schéma fonctionnel d'un dispositif 1 de pompe à vide conforme à l'invention. Le dispositif 1 comporte une pompe à vide 11, un circuit de vide 12, un arbre d'entraînement 13 de la pompe à vide, un mécanisme d'accouplement 14, un actionneur pneumatique 15 et un élément sélecteur 16.

Le dispositif 1 est destiné à équiper un véhicule étant équipé d'un moteur entraînant en rotation un arbre à cames 2. Le mécanisme d'accouplement 14 présente un état accouplé, dans lequel l'arbre à cames 2 entraîne en rotation l'arbre d'entraînement 13, et un état désaccouplé dans lequel l'arbre d'entraînement 13 n'est pas entraîné en rotation.

Dans l'état accouplé, l'arbre à cames 2 entraîne en rotation l'arbre d'entraînement 13 qui entraîne lui-même en rotation la pompe à vide 11. La rotation de la pompe à vide 11 crée une dépression dans le circuit de vide 12.

L'état accouplé est obtenu par crabotage. L'arbre à cames 2 comporte une extrémité jouxtant l'arbre d'entraînement 13 et comprenant des dents ou des saillies et l'arbre d'entraînement 13 comporte une extrémité jouxtant ladite extrémité de l'arbre à cames 2 et comprenant des logements. Un accouplement de l'arbre à cames 2 et de l'arbre d'entraînement 13 est obtenu par l'engagement des dents ou des saillies de l'arbre à cames 2 dans les logements de l'arbre d'entraînement 13 conformés en conséquence. En variante, l'arbre d'entraînement 13 comporte des dents ou des saillies et l'arbre à cames 2 comporte des logements correspondants ; le crabotage est obtenu comme décrit plus haut, *mutatis mutandis.* L'état désaccouplé est obtenu par désolidarisation des deux extrémités impliquées dans l'accouplement. Un changement d'état entre l'état accouplé et l'état désaccouplé est obtenu par un déplacement en translation de l'élément sélecteur 16 dont le fonctionnement s'apparente à celui d'une fourchette de boîte de vitesse. Lorsque l'élément sélecteur 16 est en butée du côté de l'arbre à cames 2, le mécanisme d'accouplement 14 est dans l'état accouplé. Lorsque l'élément sélecteur 16 est en butée du côté de l'arbre d'entraînement 13, le mécanisme d'accouplement 14 est dans l'état désaccouplé.

Selon un autre mode de réalisation, le mécanisme d'accouplement 14 est de type embrayage. L'état accouplé est obtenu par adhérence entre les deux extrémités des arbres impliquées dans l'accouplement. L'état désaccouplé est obtenu par désolidarisation des deux extrémités. Un changement d'état entre l'état accouplé et l'état désaccouplé est obtenu par un déplacement en translation de l'élément sélecteur 16 qui déplace en translation une des extrémités des arbres 2 ou 13 impliquées dans l'accouplement.

Le dispositif comprend un système 17 de déclenchement à deux états disposé entre l'actionneur 15 et le mécanisme d'accouplement 14 apte à commander le mécanisme d'accouplement 14 pour obtenir un accouplement franc entre l'arbre à cames 2 et l'arbre d'entraînement de la pompe à vide 13.

Selon un mode de réalisation, le système 17 de déclenchement comporte un système bistable permettant de ne faire le déplacement qu'entre 2 positions accouplement/désaccouplement. Cela contribue en plus à faire une hystérésis sur les niveaux de dépression qui enclenchent ou désenclenchent le mécanisme d'accouplement.

Le système bistable consiste à avoir 2 positions stables de réception d'un système mécanique en translation représenté par l'actionneur pneumatique, la sortie d'une des deux positions stables doit se faire avec suffisamment d'efforts. De cette manière, le système de déclenchement permet de commander le mécanisme d'accouplement entre les deux états d'accouplement et de désaccouplement.

L'élément sélecteur 16 est déplacé en translation par l'actionneur pneumatique 15. L'actionneur pneumatique 15 est alimenté en énergie pneumatique par le circuit de vide 12. Lorsque la dépression dans le circuit de vide 12 atteint un premier seuil S1 garantissant un bon fonctionnement des éléments du véhicule utilisant le circuit de vide 12, l'élément sélecteur 16 est déplacé en butée du côté de l'arbre d'entraînement 13 de sorte à mettre le mécanisme d'accouplement 14 dans un état désaccouplé. La pompe à vide 11 n'est alors plus entraînée en rotation et n'induit pas de pertes par frottement inutiles dans le moteur. La dépression dans le circuit de vide 12 reste sensiblement constante jusqu'à l'utilisation du circuit de vide 12 par un élément du véhicule. Au fur et à mesure de l'utilisation du circuit de vide, la dépression diminue jusqu'à atteindre un deuxième seuil S2 de dépression pour lequel un bon fonctionnement des éléments du véhicule n'est plus garanti. Le seuil S2 définit donc un seuil de déclenchement de l'accouplement de l'arbre à cames 2 avec l'arbre d'entrainement 13 de la pompe à vide. Le seuil S1 définit un seuil de déclenchement du désaccouplement de l'arbre à cames 2 d'avec l'arbre d'entrainement 13 de la pompe à vide.

Grâce au système 17 de déclenchement à deux états, l'état d'accouplement de l'arbre à cames avec l'arbre d'entrainement est maintenu entre les deux seuils de dépression du circuit de vide depuis le seuil S2 d'accouplement jusqu'au seuil S1 de désaccouplement. A l'atteinte du seuil S2 de dépression dans le circuit de vide, l'actionneur produit une force suffisante pour faire passer le système 17 de déclenchement dans l'autre état et déclencher le désaccouplement de l'arbre à cames 2 d'avec l'arbre d'entrainement. La pompe à vide n'est plus active et le niveau de vide va évoluer avec l'utilisation du circuit de vide jusqu'au seuil S2. De même, l'état de désaccouplement est maintenu entre le seuil S1 de désaccouplement jusqu'au seuil S2 d'accouplement.

Selon un mode de réalisation particulier, le premier seuil S1 est égal au deuxième seuil S2 et le mécanisme d'accouplement 14 passe dans un état accouplé à chaque utilisation du circuit de vide 12.

En référence aux figures 2 et 3 est représenté un schéma fonctionnel conforme à un premier mode de réalisation de l'invention. Dans ce premier mode de réalisation, l'actionneur pneumatique 15 comporte un piston 152 coulissant dans un cylindre 151. Le cylindre 151 comporte un premier orifice 154 connecté au circuit de vide 12 et un deuxième orifice 155 connecté à l'atmosphère. Le cylindre 151 est partagé en deux parties par le piston 152. Le piston 152 comporte un joint 156 faisant l'étanchéité entre une première partie du cylindre du côté du premier orifice 154, la première partie étant à la pression du circuit de vide 12, et une deuxième partie du cylindre du côté du deuxième orifice 155, la deuxième partie étant à la pression atmosphérique. La présence d'une dépression dans le circuit de vide 12 crée un différentiel de pression entre la première partie du cylindre et la deuxième partie du cylindre. Ce différentiel de pression crée une force d'aspiration s'exerçant sur le piston 152 de sorte à l'entraîner en direction du premier orifice 154. L'actionneur pneumatique 15 comporte également un mécanisme de rappel 153 de type ressort exerçant une force de rappel destinée à contrer la force d'aspiration.

Lorsque la force de rappel est supérieure à la force d'aspiration, comme c'est le cas dans la figure 2, le piston est dans une position par défaut plaçant l'élément sélecteur 16 en butée du côté de l'arbre à cames 2 de sorte à ce que le mécanisme d'accouplement 14 soit en position accouplée. Le mécanisme de rappel est dimensionné de manière à ce qu'en présence d'une dépression dans le circuit de vide 12 supérieure au premier seuil S1 garantissant un bon fonctionnement des éléments utilisant le circuit de vide 12, la force d'aspiration devient supérieure à la force de rappel. Le piston 152 se déplace alors en direction du premier orifice 154, entraînant l'élément sélecteur 16 qui vient en butée du côté de l'arbre d'entraînement 13 mettant le mécanisme d'accouplement 14 dans un état désaccouplé comme représenté à la figure 3.

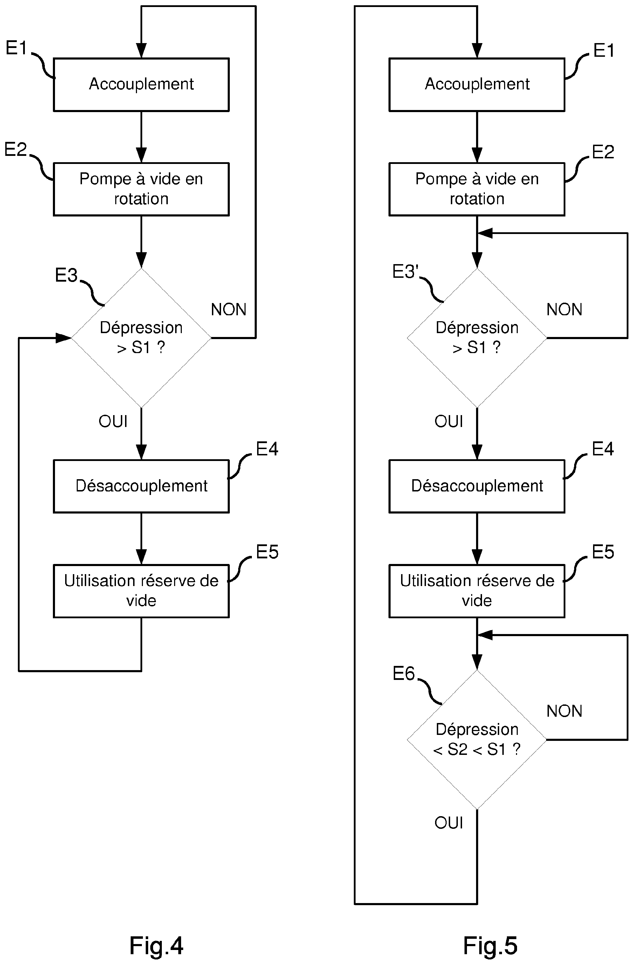

En référence à la figure 4 est représenté un organigramme conforme à un premier fonctionnement de l'invention. Le premier fonctionnement a été décrit dans le cadre des figures 2 et 3. Dans ce premier mode de fonctionnement, le passage de l'état accouplé à l'état désaccouplé se produit lorsque la dépression du circuit de vide 12 passe au dessus d'un premier seuil S1 de dépression et le passage de l'état désaccouplé à l'état accouplé se produit lorsque la dépression du circuit de vide 12 passe en dessous du premier seuil S1 de dépression. Le premier fonctionnement comprend cinq étapes E1 à E5. Dans l'étape E1, le mécanisme d'accouplement 14 est mis dans un état accouplé. Dans l'étape E2, la pompe à vide 11 est entraînée en rotation. L'étape E1 entraîne l'étape E2. Dans l'étape E3, la dépression du circuit de vide 12 est comparée au premier seuil S1. Si la dépression du circuit de vide est supérieure au premier seuil S1, l'étape E3 entraîne l'étape E4, sinon, elle entraîne l'étape E1. E3 est active en permanence. Dans l'étape E4, le mécanisme d'accouplement 14 est mis dans un état désaccouplé. Dans l'étape E5, l'utilisation de la réserve de vide fait chuter la dépression dans le circuit de vide 12 de sorte qu'à l'issue de cette étape, l'étape E3 entraîne l'étape E1. Un dispositif correspondant à ce premier fonctionnement est stable dans la mesure où la dépression dans le circuit de vide 12 est stable, c'est-à-dire sensiblement constante en l'absence d'utilisation du circuit de vide 12 et en l'absence de fonctionnement de la pompe à vide 11.

Cependant pour éviter tout risque d'instabilité, il est possible de recourir à un deuxième fonctionnement dans lequel une dépression du circuit de vide 12 oscillant autour du premier seuil S1 n'entraîne pas d'instabilité du système. Un organigramme de ce deuxième fonctionnement est représenté en figure 5. Le deuxième fonctionnement comprend des étapes E1, E2, E4 et E5 identiques à celles du premier fonctionnement ainsi qu'une étape E3' et une étape E6. Dans l'étape E3', la dépression du circuit de vide 12 est comparée au premier seuil S1. Si la dépression du circuit de vide 12 est supérieure au premier seuil S1, l'étape E3' entraîne l'étape E4, sinon, l'étape E3' reboucle simplement sur elle-même. Dans l'étape E6, la dépression du circuit de vide 12 est comparée à un deuxième seuil S2 inférieur au premier seuil S1. Si la dépression du circuit de vide 12 est inférieure au deuxième seuil S2, l'étape E6 entraîne l'étape E1, sinon, l'étape E6 reboucle simplement sur elle-même. Ce fonctionnement est obtenu en plaçant un clapet présentant une hystérésis au niveau du premier orifice 154. Ce clapet se ferme lorsque la dépression dans le circuit de vide 12 passe au dessus du premier seuil S1 et s'ouvre lorsque la dépression dans le circuit de vide 12 passe en dessous du deuxième seuil S2.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre des revendications annexées.

## Revendications

1. Dispositif (1) de pompe à vide pour un véhicule automobile comprenant un arbre à cames (2), le dispositif (1) comportant une pompe à vide (11) destinée à créer une dépression dans un circuit de vide (12), un arbre d'entraînement (13) entraînant en rotation la pompe à vide (11), un mécanisme d'accouplement (14) présentant un état accouplé, dans lequel l'arbre à cames (2) entraîne en rotation l'arbre d'entraînement (13), et un état désaccouplé dans lequel l'arbre d'entraînement (13) n'est pas entraîné en rotation, un actionneur pneumatique (15) alimenté en énergie pneumatique par le circuit de vide (12), lequel actionneur pneumatique (15) réalise un changement d'état du mécanisme d'accouplement (14) entre l'état accouplé et l'état désaccouplé,
**caractérisé en ce que** ledit dispositif comprend un système (17) de déclenchement à deux états apte à commander le mécanisme d'accouplement (14) à l'atteinte d'un premier seuil (S1) et d'un deuxième seuil de dépression (S2).

2. Dispositif (1) de pompe à vide selon la revendication 1, **caractérisé en ce que** l'actionneur pneumatique (15) est agencé de sorte à mettre le mécanisme d'accouplement (14) dans un état désaccouplé lorsque la dépression dans le circuit de vide (12) passe au dessus du premier seuil (S1) de dépression.

3. Dispositif (1) de pompe à vide selon la revendication 1 ou 2, **caractérisé en ce que** l'actionneur pneumatique (15) est agencé de sorte à mettre le mécanisme d'accouplement (14) dans un état accouplé lorsque la dépression dans le circuit de vide (12) passe en dessous du deuxième seuil (S2) de dépression.

4. Dispositif (1) de pompe à vide selon la revendication 2 ou 3, **caractérisé en ce que** le système (17) de déclenchement est agencé pour maintenir l'état accouplé depuis l'atteinte du second seuil (S2) de dépression jusqu'à l'atteinte du premier seuil (S1) de dépression.

5. Dispositif (1) de pompe à vide selon l'une quelconque des revendications 2 à 4, **caractérisé en ce que** le système (17) de déclenchement est agencé pour maintenir l'état désaccouplé depuis l'atteinte du premier seuil (S1) de dépression jusqu'à l'atteinte du second seuil (S2) de dépression.

6. Dispositif (1) de pompe à vide selon l'une quelconque des revendications précédentes **caractérisé en ce que** l'actionneur pneumatique (15) comporte un piston (152) coulissant dans un cylindre (151).

7. Dispositif (1) de pompe à vide selon l'une quelconque des revendications précédentes **caractérisé en ce que** l'actionneur pneumatique (15) comporte un mécanisme de rappel (153) rappelant l'actionneur pneumatique (15) dans une position par défaut.

8. Dispositif (1) de pompe à vide selon l'une quelconque des revendications précédentes **caractérisé en ce que** le mécanisme d'accouplement (14) comporte un élément sélecteur (16) mobile en translation entre une première position mettant le mécanisme d'accouplement (14) dans l'état accouplé et une deuxième position mettant le mécanisme d'accouplement dans l'état désaccouplé.

9. Dispositif (1) de pompe à vide selon l'une quelconque des revendications précédentes **caractérisé en ce que** le mécanisme d'accouplement (14) comporte un mécanisme de crabotage.

10. Dispositif (1) de pompe à vide selon l'une quelconque des revendications 1 à 8, **caractérisé en ce que** le mécanisme d'accouplement (14) comporte un mécanisme d'embrayage.

11. Véhicule comportant un dispositif (1) de pompe à vide selon l'une quelconque des revendications 1 à 10.

## Patentansprüche

1. Vakuumpumpenvorrichtung (1) für ein Kraftfahrzeug, das eine Nockenwelle (2) enthält, wobei die Vorrichtung (1) eine Vakuumpumpe (11), die dazu bestimmt ist, einen Unterdruck in einem Vakuumkreis (12) zu erzeugen, eine Antriebswelle (13), die die Vakuumpumpe (11) in Drehung versetzt, einen Kopplungsmechanismus (14) aufweist, der einen gekoppelten Zustand, in dem die Nockenwelle (2) die Antriebswelle (13) in Drehung versetzt, und einen entkoppelten Zustand aufweist, in dem die Antriebswelle (13) nicht in Drehung versetzt wird, ein pneumatisches Stellglied (15) aufweist, das vom Vakuumkreis (12) mit pneumatischer Energie versorgt wird, wobei das pneumatische Stellglied (15) eine Zustandsänderung des Kopplungsmechanismus (14) zwischen dem gekoppelten Zustand und dem entkoppelten durchführt
**dadurch gekennzeichnet, dass** die Vorrichtung ein Auslösesystem (17) mit zwei Zuständen enthält, das den Kopplungsmechanismus (14) bei Erreichen einer ersten (S1) und einer zweiten Unterdruckschwelle (S2) steuern kann.

2. Vakuumpumpenvorrichtung (1) nach Anspruch 1, **dadurch gekennzeichnet, dass** das pneumatische Stellglied (15) so eingerichtet ist, dass es den Kopplungsmechanismus (14) in einen entkoppelten Zustand versetzt, wenn der Unterdruck im Vakuumkreis (12) die erste Unterdruckschwelle (S1) überschreitet.

3. Vakuumpumpenvorrichtung (1) nach Anspruch 1 oder 2, **dadurch gekennzeichnet, dass** das pneumatische Stellglied (15) so eingerichtet ist, das es den Kopplungsmechanismus (14) in einen gekoppelten Zustand versetzt, wenn der Unterdruck im Vakuumkreis (12) die zweite Unterdruckschwelle (S2) unterschreitet.

4. Vakuumpumpenvorrichtung (1) nach Anspruch 2 oder 3, **dadurch gekennzeichnet, dass** das Auslösesystem (17) eingerichtet ist, um den gekoppelten Zustand vom Erreichen der zweiten Unterdruckschwelle (S2) bis zum Erreichen der ersten Unterdruckschwelle (S1) zu halten.

5. Vakuumpumpenvorrichtung (1) nach einem der Ansprüche 2 bis 4, **dadurch gekennzeichnet, dass** das Auslösesystem (17) eingerichtet ist, um den entkoppelten Zustand vom Erreichen der ersten Unterdruckschwelle (S1) bis zum Erreichen der zweiten Unterdruckschwelle (S2) zu halten.

6. Vakuumpumpenvorrichtung (1) nach einem der vorhergehenden Ansprüche, **dadurch gekennzeichnet, dass** das pneumatische Stellglied (15) einen in einem Zylinder (151) gleitenden Kolben (152) aufweist.

7. Vakuumpumpenvorrichtung (1) nach einem der vorhergehenden Ansprüche, **dadurch gekennzeichnet, dass** das pneumatische Stellglied (15) einen Rückholmechanismus (153) aufweist, der das pneumatische Stellglied (15) in eine Standardstellung zurückholt.

8. Vakuumpumpenvorrichtung (1) nach einem der vorhergehenden Ansprüche, **dadurch gekennzeichnet, dass** der Kopplungsmechanismus (14) ein Auswahlelement (16) aufweist, das zwischen einer ersten Stellung, die den Kopplungsmechanismus (14) in den gekoppelten Zustand versetzt, und einer zweiten Stellung translationsbeweglich ist, die den Kopplungsmechanismus in den entkoppelten Zustand versetzt.

9. Vakuumpumpenvorrichtung (1) nach einem der vorhergehenden Ansprüche, **dadurch gekennzeichnet, dass** der Kopplungsmechanismus (14) einen Klauenkupplungsmechanismus aufweist.

10. Vakuumpumpenvorrichtung (1) nach einem der Ansprüche 1 bis 8, **dadurch gekennzeichnet, dass** der Kopplungsmechanismus (14) einen Kupplungsmechanismus aufweist.

11. Fahrzeug, das eine Vakuumpumpenvorrichtung (1) nach einem der Ansprüche 1 bis 10 aufweist.

## Claims

1. Vacuum pump device (1) for a motor vehicle comprising a camshaft (2), the device (1) comprising a vacuum pump (11) which is intended to produce a reduced pressure in a vacuum circuit (12), a drive shaft (13) rotatably driving the vacuum pump (11), a coupling mechanism (14) having a coupled state in which the camshaft (2) rotatably drives the drive shaft (13), and an uncoupled state in which the drive shaft (13) is not rotatably driven, a pneumatic actuator (15) which is supplied with pneumatic energy by the vacuum circuit (12), which pneumatic actuator (15) carries out a change of state of the coupling mechanism (14) between the coupled state and the uncoupled state
**characterized in that** the device comprises an activation system (17) with two states which is capable of controlling the coupling mechanism (14) when a first reduced pressure threshold (S1) and a second reduced pressure threshold (S2) are reached.

2. Vacuum pump device (1) according to Claim 1, **characterized in that** the pneumatic actuator (15) is arranged so as to place the coupling mechanism (14) in an uncoupled state when the reduced pressure in the vacuum circuit (12) moves above the first reduced pressure threshold (S1).

3. Vacuum pump device (1) according to Claim 1 or 2, **characterized in that** the pneumatic actuator (15) is arranged so as to place the coupling mechanism (14) in a coupled state when the reduced pressure in the vacuum circuit (12) falls below the second reduced pressure threshold (S2).

4. Vacuum pump device (1) according to Claim 2 or 3, **characterized in that** the activation system (17) is arranged to maintain the coupled state from when the second reduced pressure threshold (S2) is reached until the first reduced pressure threshold (S1) is reached.

5. Vacuum pump device (1) according to any one of Claims 2 to 4, **characterized in that** the activation system (17) is arranged to maintain the uncoupled state from when the first reduced pressure threshold (S1) is reached until the second reduced pressure threshold (S2) is reached.

6. Vacuum pump device (1) according to any one of the preceding claims, **characterized in that** the pneumatic actuator (15) comprises a piston (152) which slides in a cylinder (151).

7. Vacuum pump device (1) according to any one of the preceding claims, **characterized in that** the pneumatic actuator (15) comprises a return mechanism (153) which returns the pneumatic actuator (15) into a default position.

8. Vacuum pump device (1) according to any one of the preceding claims, **characterized in that** the coupling mechanism (14) comprises a selector element (16) which can be moved in translation between a first position which places the coupling mechanism (14) into the coupled state and a second position which places the coupling mechanism into the uncoupled state.

9. Vacuum pump device (1) according to any one of the preceding claims, **characterized in that** the coupling mechanism (14) comprises a jaw clutch mechanism.

10. Vacuum pump device (1) according to any one of the preceding Claims 1 to 8, **characterized in that** the coupling mechanism (14) comprises a clutch mechanism.

11. Vehicle comprising a vacuum pump device (1) according to any one of Claims 1 to 10.
